# EUROPEAN PATENT SPECIFICATION

(11) **EP 2 390 408 B1**
(45) Date of publication and mention of the grant of the patent: **27.03.2013**
(21) Application number: 10164454.0
(22) Date of filing: 31.05.2010
(51) Int. Cl.: D21C 5/00, D21C 5/02, D21C 9/16, D21C 9/10

(54) **Control of enzymes in the production of pulp**
Steuerung von Enzymen bei der Herstellung von Pulpe
Contrôle d'enzymes pour la production de pâte

(43) Date of publication of application: 30.11.2011
(73) Proprietor: Kemira Oyj, 00180 Helsinki (FI)
(72) Inventor: Sarja, Tiina, 90570, Oulu (FI); Kolari, Marko, 01260, Vantaa (FI)
(74) Representative: Hjelt, Pia Dorrit Helene

(56) References cited:
- EP-A1- 0 562 835
- EP-A1- 0 661 403
- WO-A1-2006/032450
- GB-A- 2 269 191

## Description

### FIELD OF THE INVENTION

The present invention relates to a method for inactivating hydrogen peroxide decomposing enzymes in the production of recycled fiber pulp and/or mechanical pulp comprising providing solid peroxygen or non-aqueous solution of solid peroxygen to an aqueous process for fiber production. The invention also relates to the use of solid peroxygen or non-aqueous solution of solid peroxygen in the production of recycled fiber pulp and/or mechanical pulp.

### BACKGROUND OF THE INVENTION

Bacteria are often present in the pulp and papermaking processes. Especially this is the case when recycled paper is used. The bacteria produce enzymes such as catalases. Catalase is a common enzyme found in nearly all living organisms which are exposed to oxygen. It functions to catalyze the decomposition of hydrogen peroxide to water and oxygen. Catalase has one of the highest turnover numbers of all enzymes; one molecule of catalase can convert millions of molecules of hydrogen peroxide to water and oxygen per second.

Catalase is present in pulp and process waters in recycled fiber plants, where it is a major problem in the processing of recycled fiber. Catalase destroys peroxide and this leads to high consumption of peroxide. Bacteria produce catalase to protect themselves against peroxide. More and more peroxide needs to be added, unless the catalase amount in recycled fiber process is kept at a low level.

A common oxidizing compound is sodium percarbonate (SPC), which is a watersoluble crystalline peroxygen compound with the molecular formula 2Na₂CO₃·3H₂O₂. Sodium percarbonate dissolves relatively fast in water, releasing sodium carbonate and hydrogen peroxide in the solution.

US patent 3,951,838 discloses a method for preparing sodium percarbonate. US 2006/0063693, EP 0 789 748, EP 1 149 800 B1 and EP 0 623 553 B1 disclose coated sodium percarbonate particles.

The international patent publications WO 2009/052142 and WO 2009/050191 disclose the production of a delayed-release sodium percarbonate formulation and use in well treatment fluid composition. The delayed-release sodium percarbonate is formed from sodium percarbonate granules, which have a core of sodium percarbonate and a delayed-release coating. The sodium percarbonate particles can be coated with an inorganic material or a polymeric material.

Sodium percarbonate has been shown to be efficient in the bleaching of mechanical pulps (Leduc et al., Appita Journal 60(3):241-244, 2007). Sodium perborate and sodium percarbonate have been evaluated for bleaching of deinked pulp (Leduc et al., Progress in Paper Recycling 15(3):6-11, 2006). Leduc et al. do not, however, use solid sodium percarbonate.

International patent application WO 95/17546 discloses hydroxylamine for inhibiting hydrogen peroxide decomposing enzymes such as catalases. However, hydroxylamine has not worked properly. Glutaraldehyde has been used for inhibiting catalase (US 5,728,263). However, glutaraldehyde is a toxic compound and therefore unpleasant to use.

Also ozone has been used to Inactivate catalase (EP 0 661 403 A1). EP 0 562 835 A1 discloses chlorine dioxide as an enzyme-inactivator for destructing catalase produced by bacteria. GB 2 269 191 discloses a method for reducing the rate of hydrogen peroxide decomposition caused by catalase producing micro-organisms in aqueous process liquids by using organic peracid treatment. International patent application WO 2006/032450 discloses the use of HCHO-releasing chemicals for the inactivation of catalase.

Furthermore, it is observed that even if the bacteria are killed the activity of the enzyme is not stopped. Even decayed bacteria may leave behind active enzymes.

Accordingly there is a need for alternative methods for inhibiting hydrogen peroxide decomposing enzymes.

### BRIEF DESCRIPTION OF THE INVENTION

An object of the present invention is thus to provide a novel approach to overcome at least partly the problems associated with the prior art.

The present invention relates to a method for inhibiting hydrogen peroxide decomposing enzymes in the production of recycled fiber pulp and/or mechanical pulp. The method comprises providing solid peroxygen or non-aqueous solution of solid peroxygen to an aqueous process for fiber production.

An aqueous process for fiber production comprises at least fiber and/or pulp processing, optionally water processing, water recirculation system(s) and/or bleaching process(es). Water processing and water recirculation system(s) may contain e.g., water storage tanks and pipelines. Solid peroxygen or non-aqueous solution of solid peroxygen can be added during any stage of the aqueous process for fiber production, in one or several addition points.

Basic Idea of the present invention is the finding that sodium percarbonate (SPC) can be used In the production of recycled fiber pulp and/or mechanical pulp to prevent peroxide decomposition due to catalase enzyme produced by bacteria. SPC can be added either directly in the repulper of recovered paper or to the dilution water used in the process. SPC inactivates catalase enzyme and stabilizes the peroxide level in the recycled fiber plant. SPC has been tested in pure water-peroxide-catalase system and also in pulp and process water from a recycled paper plant.

In the present invention sodium percarbonate (SPC) is added as a solid compound or as a non-aqueous solution. In other words solid peroxygen or non-aqueous solution of solid peroxygen is used in the invention. Coated or uncoated SPC particles can be used. An SPC particle can be coated with Na₂SO₄. An alternative to the solid SPC particles is for example a non-aqueous liquid forming a dispersion, wherein SPC is still present as percarbonate.

Oxidizing biocides, such as ammonium bromide mixed with sodium hypochlorite have been used for catalase control with variable success. Extensive use of active halogen-containing biocides creates also a corrosion risk. From the non-oxidising biocides glutaraldehyde has been widely used for inhibiting catalase at recycled fiber plants. However, It is a toxic compound and burdensome to use. Furthermore, the cost for using glutaraldehyde is relatively high.

An advantage of the present invention is that sodium percarbonate not only adds peroxide to replace the destroyed peroxide, but also inhibits the catalase enzyme itself. A novel and cost efficient method for inhibiting hydrogen peroxide decomposing enzyme activity is thus provided. The method of the present invention is a novel and cost-effective alternative to the currently used biocides, e.g. glutaraldehyde.

An advantage of the invention is that SPC might also replace part of NaOH and/or liquid hydrogen peroxide needed in the process, e.g. in pulper.

SPC dosed Into system with peroxide and catalase brings more peroxide to the system but also seems to inactivate catalase enzyme thus stabilizing the peroxide level. Catalase activity is decreased whereby residual peroxide is left for bleaching. SPC may be used in combination with one or more biocides.

### BRIEF DESCRIPTION OF THE DRAWINGS

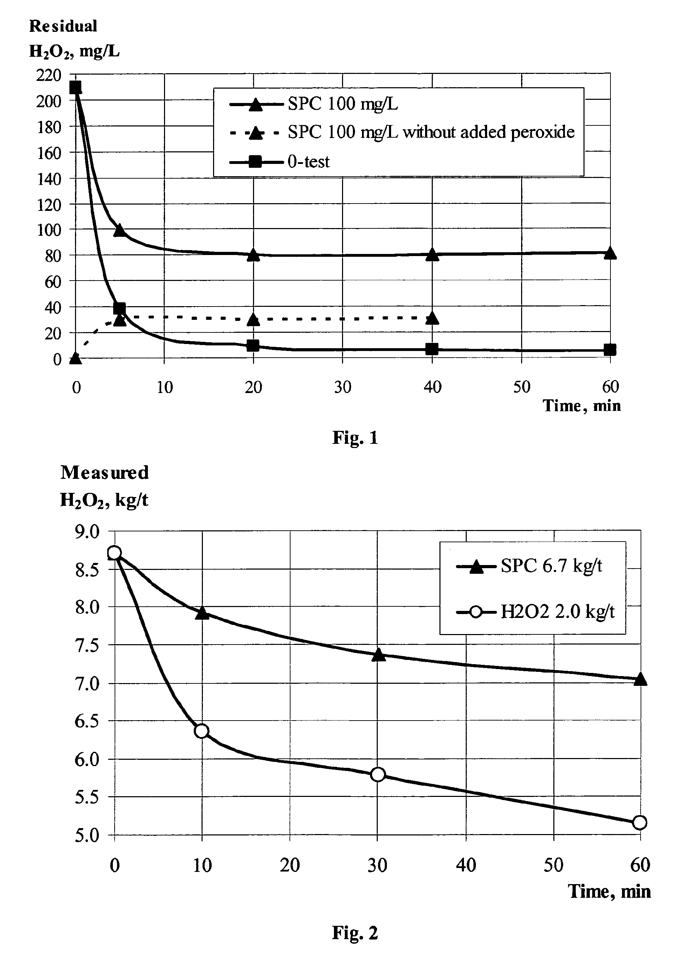

**Figure 1** depicts that higher residual peroxide level was obtained with SPC (triangle, solid line) than without any catalase control additive (square) with water-catalase-peroxide system at pH 9.7. Catalase destroys the 210 mg/l of peroxide very rapidly (square). Addition of 100 mg/L of SPC was able to retain the residual peroxide concentration at markedly higher level (triangle). Actually after some initial peroxide degradation, the peroxide level stabilized to ∼80 mg/L. It is observed that SPC brings peroxide into the system; the amount of peroxide was measured to be 30 mg/L (triangle dotted line).
**Figure 2** depicts that SPC resulted in higher peroxide concentrations than the reference, where an equal amount of 100% peroxide as came with the SPC was added. The experiment was carried out with 3% pulp made of recovered paper. Less peroxide decomposed when SPC was used (triangle) compared to the situation where an equal amount of peroxide was added (sphere). It means that SPC has catalase-inhibiting properties and not only brings additional peroxide to the system.

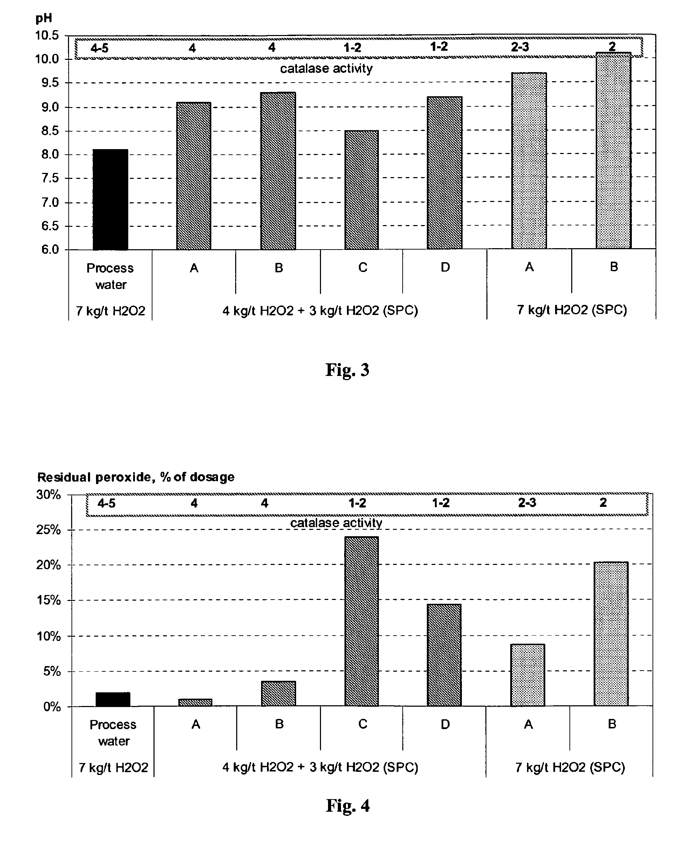

**Figure 3** depicts pH values and catalase activities after pulping with a solid sodium sulphate coated SPC product and solid SPCs with different release times of the oxidising agent.
**Figure 4** depicts residual peroxide concentration (% of dosage) and catalase activities after pulping with a solid sodium sulphate coated SPC product and solid SPCs with different release times of the oxidising agent.

### DETAILED DESCRIPTION OF THE INVENTION

The present invention provides a method for inactivating hydrogen peroxide decomposing enzyme activity in the production of recycled fiber pulp and/or mechanical pulp comprising providing solid peroxygen or non-aqueous solution of peroxygen to an aqueous process for fiber production.

Unless otherwise specified, the terms, which are used in the specification and claims, have the meanings commonly used in the pulp and paper industry. Specifically the following terms have the meanings indicated below.

The term "solid peroxygen" refers to a solid compound, which releases peroxide upon dissolving. In other words, it means a solid substance which releases active oxygen in the aqueous phase. Solid peroxygen of non-aqueous solution of peroxygen comprises for example sodium percarbonate (SPC) or sodium perborate or other inorganic peroxygen compounds or mixtures thereof.

The term "delayed-release" or "slow release" refers to a dissolution profile that retards the release of oxidizing agent such as sodium percarbonate into the surroundings. For example, the "delayed-release coatings" of the sodium percarbonate particles could provide dissolution times of on the order of a few minutes up to about 5 hours at neutral pHs (i.e. pHs at from about 6 to about 8) depending on the application.

The term "inactivating hydrogen peroxide decomposing enzymes" means that the activity of said enzymes is inhibited.

An aqueous process for fiber production comprises at least fiber and/or pulp processing, optionally water processing, water recirculation system(s) and/or bleaching process(es). Water processing and water recirculation system(s) may contain e.g. water storage tanks and pipelines. Solid peroxygen or non-aqueous solution of peroxygen can be added during any stage of the aqueous process for fiber production, in one or several addition points.

In the present invention it has been surprisingly found out that sodium percarbonate (SPC) can be used in the production of recycled fiber pulp and/or mechanical pulp to prevent peroxide decomposition due to catalase enzyme produced by bacteria. SPC can be added either directly in the repulper of recovered paper or to the dilution water used in the process. SPC inactivates catalase enzyme and stabilizes the peroxide level in the recycled fiber process. SPC has been tested in pure water-peroxide-catalase system and also in pulp and process water from a recycled fiber plant.

In a repulper fiber material, e.g. in the form of paper, and water are present. Catalase is present in process waters in recycled fiber plants where recycled fiber is produced, in process waters of mechanical pulp and in the pulp.

In the present invention added solid peroxygen or non-aqueous solution of peroxygen, e.g. SPC, is contacted with catalase-containing water.

The invention provides a method for inactivating hydrogen peroxide decomposing enzymes in the production of recycled fiber pulp and/or mechanical pulp comprising providing solid peroxygen or non-aqueous solution of peroxygen to an aqueous process for fiber production.

In a preferred embodiment hydrogen peroxide decomposing enzymes comprise catalases.

In a preferred embodiment of the present invention solid peroxygen or non-aqueous solution of peroxygen comprises sodium percarbonate or sodium perborate or other inorganic peroxygen compounds or mixtures thereof.

In a more preferred embodiment the solid peroxygen or non-aqueous solution of peroxygen comprise sodium percarbonate (SPC) particles.

In a preferred embodiment of the invention sodium percarbonate particles have a coating. The coating can be of sodium sulphate or a delayed-release coating. The delayed-release coating is made of an inorganic material. Suitable inorganic materials include alkali metal and/or alkaline earth metal silicates. The metal silicate may be an alkali metal silicate, an alkaline earth metal silicate or aluminium silicate or mixture of these silicates.

The size of the peroxygen particles comprising NaCO₃ coated with Na₂SO₄ may be in the range of 6 to 900 micrometers with maximum 1% > 1.6 mm and maximum 2% < 0.15 mm.

In a preferred embodiment of the present invention pulp comprises recovered fiber. Recovered fiber may be from any source such as uncoated or coated paper or board, bleached or unbleached fiber, mechanical or chemical pulp, wood or agrofiber (e.g. straw).

In a preferred embodiment the amount of solid peroxygen or non-aqueous solution of peroxygen is 0.1-10 kg/t o.d. paper or 0.001-100 g/L in process water. The preferred amount is 1-6 kg/t SPC per o.d paper, or 0.01-30 g/L in process water.

In a preferred embodiment, the contact time of solid peroxygen or non-aqueous solution of peroxygen with catalase-containing water is at least 2 minutes, preferably 10 minutes, preferably at least 20 minutes, more preferably at least 30 minutes, more preferably at least 45 minutes.

In a preferred embodiment of the invention the method comprises adding of a biocide to the pulp. Examples of a biocide include glutaraldehyde, 2,2-dibromo-3-nitrilopropionamide (DBNPA), 2-bromo-2-nitro-propane-1,3-diol (Bronopol), tetracishydroxymethylphosphonium sulphate (THPS), isothiazolines such as CMIT and MIT, quaternary ammonium compounds, peracids such as peracetic or performic acid, halogenated hydantoins such as fully or partially halogenated dialkyl hydantoins, for example bromochlorodimethylhydantoin or chlorinated-5,5-dimethylhydantoin, 1,2-benzisothiazolin-3-one, haloamines such as monohaloamine, dihaloamine, trihaloamine, or a combination thereof, and more preferably monochloramine, monobromamine, bromochloramine, or a combination thereof, formed by combining an ammonium source and an oxidant.

The invention provides a use of solid peroxygen or non-aqueous solution of peroxygen for inactivating hydrogen peroxide decomposing enzymes in the production of recycled fiber pulp and/or in the production of mechanical pulp, in the treatment of pulp as well as in water storage tanks and in bleaching. Production of mechanical pulp includes production of wood into fibrous material and any further treatments of the resulting mechanical pulp. Mechanical pulp includes groundwood pulp, thermomechanical pulp (TMP) and chemi-thermomechanical pulp (CTMP).

The following examples are given to further illustrate the invention and are not intended to limit the scope thereof. Based on the description, a person skilled in the art will be able to modify the invention in many ways.

### EXAMPLES

### Materials and methods

### SPC products

Sodium percarbonate (SPC) products are substantially spherical particles with a core of sodium carbonate and hydrogen peroxide. Four different sodium percarbonate (SPC) products are presented in Table 1, namely products A, B, C and D. Product A is a basic sodium sulphate coated SPC product having the hydrogen peroxide content of 28%. Products B, C and D are delayed-release products having a special silicate coating of different thickness (15, 20 and 28 weight-% coating, respectively) which affect the dissolution of the SPC. The hydrogen peroxide contents of products B, C and D are 24%, 23% and 24%, respectively. Uncoated SPC is referred to as product E, which is approximately of the same size as SPC product A coated with sodium sulphate.

**Table 1. The composition of different sodium percarbonate products.**

| **SPC product** | **A** | **B** | **C** | **D** |
|---|---|---|---|---|
| **Coating structure** | Coated SPC | SPC + silicate 15% | SPC + silicate 20% | SPC + silicate 28% |
| **Amount of silicate coating** | 0% | 15% | 20% | 28% |
| **Dissolving time** | 1 min | - 30 min | - > 45 min | - > 60 min |
| **Average particle size range** | 6-900 µm with max 1% > 1.6 mm and max 2% < 0.15 mm | the diameter of product A + 10-15 % | | |

### Catalase activity ("Quick test")

The quick test was carried out to measure catalase activity in the filtrate from the pulp. 1 mL of filtrate (free of fibres) was pipetted onto a Petri dish (the larger part). 1 drop of 10% peroxide was added and mixed into the sample. The smaller part of the Petri dish was placed up-side down on the larger Petri dish containing the water sample so that a liquid film was formed between the two dishes. If there is catalase activity in the sample the catalase enzymes will start to degrade H₂O₂ to water and O₂-gas. This will be seen as formation of bubbles. The samples are checked after 5 and 20 minutes. The approximate amount of catalase activity is determined by comparing the amount of bubbles formed on a scale from 0-5 scale, where 5 means a lot of bubbles after 5 min, 4 means a lot of bubbles after 20 min, 3 means some bubbles after 20 min, 2 means few bubbles after 20 min, 1 means very few bubbles after 20 min and 0 means no bubbles after 20 min.

### Pad preparation

Brightness pads of 3.3 g each were made on a Büchner funnel (∅ 15 cm) on black label filter paper. The formed pads were pressed between blotter papers with a heavy steel roll and dried in a Rapid-Köthen pressurised drier at 94°C for 15 min.

### Optical properties

The optical properties of the pads were determined on a Technidyne ColorTouch PC spectrophotometer. ISO brightness was determined as the average of 3 measurements per pad (up side).

### Example 1

### The effect of sodium percarbonate (SPC) on catalase in water phase

Sodium percarbonate (SPC product E) was tested in a pure distilled water system containing peroxide (210 mg/L), commercial catalase enzyme (1 µL/L) and NaOH to adjust the pH to 9.7 corresponding to the alkaline conditions in a recycled fiber plant. The size of SPC particles comprising NaCO₃ coated with Na₂SO₄ was between 6 and 900 micrometers with maximum 1% > 1.6 mm and maximum 2% < 0.15 mm. Peroxide decomposition was measured by titration against time. The results are shown in Figure 1 and Table 2. Higher residual peroxide level was obtained with SPC than without any catalase control additive with water-catalase-peroxide system at pH 9.7. Catalase destroyed the 210 mg/l of peroxide very rapidly (Figure 1, black square). Addition of 100 mg/L of SPC was able to retain the residual peroxide concentration at markedly higher level (triangle). After some initial peroxide degradation, the peroxide level stabilized to ∼80 mg/L. It is known that SPC brings peroxide in the system; this was measured to be 30 mg/L (triangle dotted line). The measured benefit was, however, much greater than this (50 mg/L higher than what only came from SPC), indicating that SPC also inhibits the catalase enzyme. Probably catalase enzyme managed to degrade a part of the added peroxide before it was inactivated. The same results are also shown in Table 2 below.

**Table 2. The effect of SPC product A on peroxide decomposition in the presence of a commercial catalase, and the effect of SPC on the peroxide titration (SPC without catalase and without added H₂O₂). 0-test was carried out without SPC but with peroxide.**

| | Dose | Measured H₂O₂, mg/L | | | | |
|---|---|---|---|---|---|---|
| | mg/L | 0 min | 5 min | 20 min | 40 min | 60 min |
| SPC with catalase and added H₂O₂ | 100 | 210 | 99.9 | 80.1 | 80.1 | 81.4 |
| SPC without catalase and added H₂O₂ | 100 | 0 | 29.8 | 30.4 | 31.1 | - |
| Catalase and added H₂O₂ | 0 | 210 | 38.4 | 9.3 | 6.6 | 5.3 |

### Example 2

### The effect of sodium percarbonate (SPC) in a pulping stage on catalase-containing process water from a recycled fiber pilot plant

The effect of SPC product A was studied with a system consisting of recycled fiber pulp and process water with natural catalase. Pulp for the experiment was produced at a recycled fiber pilot plant pulper. Old magazines and old newspapers (OMG/ONP 50/50) were shredded and repulped using process water from a European recycled fiber plant. in the pilot pulper at 19% consistency for 20 minutes with alkaline soap chemistry without peroxide (NaOH 10 kg/t (100%), water glass 15 kg/t (product), soap 5 kg/t). The pulp was stored in freezer until used. Process water from the recycled fiber pilot plant was used in the experiments for diluting the pulp into 3%. The water was stored in room temperature for 2 days until it showed catalase activity produced by bacteria to destroy the peroxide in the tests.

6.7 kg/t of SPC A was added to the pulp and stirred for 5 minutes. After that, 7 kg/t of 100% peroxide was added (at 0 min in Figure 2 and Table 3) and the concentration of peroxide in the pulp filtrate was measured against time. The SPC addition brought into the system slightly below 2.0 kg peroxide /ton. Therefore, 2.0 kg of peroxide/t representing a reference sample was added to the pulp and stirred for 5 minutes. Again, after that 7 kg/t of 100% peroxide was added (at 0 min in Figure 2 and Table 3) and the concentration of peroxide was determined by titration against time from the pulp filtrate.

Less peroxide decomposed when SPC was used (triangle in Figure 2) compared to the situation where an equal amount of peroxide was added (sphere in Figure 2). This means that SPC has catalase-inhibiting properties and not only brings additional peroxide to the system.

**Table 3. The concentration of peroxide in 3% recovered paper pulp with SPC and corresponding amount of peroxide. H₂O₂ represents a reference sample. In addition, 7 kg/t of peroxide was added at 0 min in both of the tests.**

| | **Dose kg/t** | **Measured H₂O₂, kg/t** | | | |
|---|---|---|---|---|---|
| | | **0 min** | **10min** | **30min** | **60min** |
| **SPC + 7 kg/t H₂O₂** | 6.7 | 8.7 | 7.9 | 7.4 | 7.0 |
| **H₂O₂ + 7 kg/t H₂O₂** | 2.0 | 8.7 | 6.4 | 5.8 | 5.2 |

### Example 3

### The effect of sodium percarbonate (SPC) in a pulping stage on catalase-containing process water from a recycled fiber plant (A)

Different sodium percarbonate products (SPC) (presented in Table 1) were tested for catalase control in the recovered paper pulping stage. Process water with high catalase activity (clear filtrate) from a recycled fiber plant in Germany producing magazine paper (Mill A) was used in this study. A 50:50 mixture of German magazine and newspaper was pulped with a Kenwood mixer as a batch of 180 g of dry paper. A 60:40 ratio of Mill A process water to tap water was used in pulping. The reference pulping was carried out with pure tap water. After pulping, pH, residual peroxide and catalase activity were measured from the filtrate pressed from the pulp as described in Example 1.

### Catalase control in pulping stage

The behavior of catalase enzyme was clarified at pulping conditions. The adding order and dosages of the pulping chemicals was: water, CaCl₂, 0.5 kg/t Lionsurf 1080 (nonionic surfactant), SPC (when used), shredded paper and 7 kg/t hydrogen peroxide as last.

The dose of pure hydrogen peroxide was decreased when SPC was used so that total active peroxide dose was always 7 kg/t. SPC was dosed based on its peroxide content. An SPC dosage of 3 kg/t of peroxide (product based dosages of 10 -13 kg/t) was combined with 4 kg/t of pure hydrogen peroxide. Furthermore, the entire (7 kg/t) pure peroxide load was replaced by SPC (product based dosages of 25-30 kg/t).

The pulping was done at a consistency of 12% and at temperature of 45°C for 20 min. Before pulping the paper was soaked in water with chemicals for 10 min.

The catalase activity was determined at the pulping conditions without addition of SPC. Then the catalase activity was re-tested after addition of SPC to the pulper.

### Results

Table 4 shows the results from the pulper study using mill process water containing catalase.

**Table 4. Results from pulping with catalase-containing process water and from pulping with different SPC products (4 kg/t peroxide + 3 kg/t peroxide from SPC product, and all 7 kg/t peroxide from SPC product). Results are also presented in Figure 3 and 4.**

| **Test point** | | **SPC** | **Water** | **Residual peroxide** | **Catalase** | **pH** |
|---|---|---|---|---|---|---|
| | | **kq/t** | | **%** | **0-5** | |
| 1 | Tap water | 0 | Tap | 91.3 | 0 | 8.2 |
| 2 | Process water | 0 | Process | 1.9 | 4-5 | 8.1 |
| | | | | | | |
| 3 | A | 3 | Process | 0.9 | 4 | 9.1 |
| 4 | B | 3 | Process | 3.4 | 4 | 9.3 |
| 5 | C | 3 | Process | 23.9 | 1-2 | 8.5 |
| 6 | D | 3 | Process | 14.4 | 1-2 | 9.2 |
| 7 | A | 7 | Process | 8.7 | 2-3 | 9.7 |
| 8 | B | 7 | Process | 20.4 | 2 | 10.1 |

The test point with only tap water shows that peroxide is not consumed. The residual peroxide concentration was 91% of the initial dose.

The process water from Mill A had a very high catalase activity (5, on the quick test scale). When using this process water in pulping the catalase activity remained high (4-5) after pulping and there was very little residual peroxide

The pH values and catalase activities after pulping with different SPC-grades are presented in Figure 3. Figure 4 shows residual peroxide concentration and catalase activities after pulping with different SPC-grades.

SPC in general was able to reduce the catalase activity depending on dosage and composition. SPC products C and D were particularly effective even at additions of 3 kg/t peroxide from SPC (+4 kg/t pure peroxide).

Higher amounts of residual peroxide were detected when SPC products C or D combined with normal peroxide were used. In these samples, the catalase activity was also low (Figure 4).

When only SPC was used (7 kg/t peroxide from SPC product A or B), the catalase activity was decreased and residual peroxide was detected

In pulping conditions SPC can reduce the activity of the catalase enzyme and increase the residual peroxide concentration after pulping. Especially the SPC products C and D were able reduce the catalase activity. The catalase produced from bacteria can have different properties (sensitivity to pH or peroxide dosage for instance) depending on the conditions the bacteria were subjected to in the mill.

### Example 4

### Catalase control in recycled fiber plant (Mill B) process waters

The effect of SPC was studied in a water system using process water from a European newsprint recycled fiber plant (Mill B). 100 mL of process water was heated in a water bath to 45°C and mixed with a magnetic stirrer. Sodium percarbonate (SPC) was added as powder. Two different concentrations of SPC product A were used 3 and 4 g/L (i.e. 0.85 and 1.13 g/L peroxide). SPC products B, C and D were based on the same amount of peroxide as in SPC product A. Samples were taken from the water for quick catalase test after 15, 30 and 45 minutes.

The process water had high catalase activity (5 on scale 0-5). The process water was also boiled in order to verify that it is not metals in the process water that break down the catalase. The boiled water gave no catalase activity at all, proving that the water contained catalase that breaks down peroxide.

At the tested SPC dosages (3 and 4 g/L), the SPC products were all able to decrease the activity of catalase, but at the higher dosage were SPC products B, C and D able to inhibit the catalase activity completely after 30- 45 min. SPC product A could not inhibit all catalase at the concentration of 4 g/L, but decreased it to level 2. The results are presented in Table 5.

Addition of SPC products to tap water at same concentration did not give bubbles in catalase quick test.

**Table 5. The effect of sodium percarbonate studied in mill process water system.**

| | **pH** | | | **Catalase (0-5)** | | |
|---|---|---|---|---|---|---|
| 45°C | **15 min** | **30 min** | **45 min** | **15 min** | **30 min** | **45 min** |
| **Mill C water** | 6.9 | - | - | 5 | 5 | 5 |
| **Mill C water (boiled)** | | | | 0 | - | - |
| **+ 3 g/L A** | 10.2 | 10.2 | 10.1 | 3 | 2-3 | 2-3 |
| **+ 3 g/L B** | 10.1 | 10.1 | 10.1 | 2 | 0-1 | 1 |
| **+ 3 g/L D** | 10.1 | 10.1 | 10.1 | 3-4 | 3-4 | 3-4 |
| **+ 4 g/L A** | 10.3 | 10.3 | 10.3 | 3 | 3 | 2 |
| **+ 4 g/L B** | 10.3 | 10.3 | 10.3 | 2 | 0-1 | 0 |
| **+ 4 g/L C** | 10.3 | 10.3 | 10.3 | 1 | 0-1 | 0 |
| **+ 4 g/L D** | 10.5 | 10.4 | 10.4 | 3 | 2 | 0-1 |
| **+ 4 g/L D-repeat** | 10.4 | 10.3 | 10.3 | 2-3 | 0-1 | 0 |
| **tap water, + 3 g/L C** | 11.0 | - | - | 0 | - | - |

## Claims

1. A method for inactivating hydrogen peroxide decomposing enzymes in the production of recycled fiber pulp and/or mechanical pulp **characterized in that** the method comprises providing solid peroxygen or non-aqueous solution of solid peroxygen to an aqueous process for fiber production.

2. The method of claim 1, wherein solid peroxygen or non-aqueous solution of solid peroxygen comprises sodium percarbonate and/or sodium perborate.

3. The method of claim 1 or 2, wherein the pulp comprises recovered paper.

4. The method of any of the preceding claims, wherein the hydrogen peroxide decomposing enzymes comprise catalases.

5. The method of any of the preceding claims, wherein the amount of solid peroxygen or non-aqueous solution of solid peroxygen is 0.1-10 kg/t o.d. paper or 0.001-100 g/L in process water, preferably 1-6 kg/t per o.d paper, or 0.01-30 g/L in process water.

6. The method of any of the preceding claims, wherein contact time of solid peroxygen or non-aqueous solution of solid peroxygen with catalase-containing water is at least 2 minutes, preferably 10 minutes, more preferably at least 20 minutes, more preferably at least 30 minutes, more preferably at least 45 minutes.

7. The method of any of the preceding claims, wherein sodium percarbonate particles have a coating.

8. The method of any of the preceding claims, wherein coated sodium percarbonate particles have a delayed-release coating.

9. The method of any of the preceding claims, wherein the delayed-release coating comprises inorganic material.

10. The method of any of the preceding claims, wherein the inorganic material comprises an alkali metal silicate.

11. The method of any of the preceding claims, wherein the sodium percarbonate particles comprise sodium sulphate coating.

12. The method of any of the preceding claims comprising addition of at least one biocide to the process.

13. Use of solid peroxygen or non-aqueous solution of solid peroxygen for inactivating hydrogen peroxide decomposing enzymes in an aqueous process for the production of recycled fiber pulp and/or mechanical pulp

14. Use according to claim 13, wherein solid peroxygen or non-aqueous solution of solid peroxide comprises coated sodium percarbonate particles, optionally with a delayed-release coating.

## Patentansprüche

1. Verfahren zum Deaktivieren von Enzymen, die Wasserstoffperoxid zerlegen, bei der Herstellung von recyceltem Faserbrei und/oder Holzschliff, **dadurch gekennzeichnet, dass** das Verfahren das Bereitstellen von festem Persauerstoff oder einer nicht wässrigen Lösung von festem Persauerstoff für einen Wässerungsprozess für die Faserherstellung umfasst.

2. Verfahren nach Anspruch 1, wobei der feste Persauerstoff oder die nicht wässrige Lösung von festem Persauerstoff Natriumpercarbonat und/oder Natriumperborat enthält.

3. Verfahren nach Anspruch 1 oder 2, wobei der Brei wiedergewonnenes Papier enthält.

4. Verfahren nach einem der vorhergehenden Ansprüche, wobei die Enzyme, die Wasserstoffperoxid zerlegen, Katalasen enthalten.

5. Verfahren nach einem der vorhergehenden Ansprüche, wobei die Menge an festem Persauerstoff oder einer nicht wässrigen Lösung von festem Persauerstoff gleich 0,1-10 kg/t o.d. Papier oder 0,001-100 g/L in Prozesswasser, vorzugsweise 1-6 kg/t pro o.d. Papier oder 0,01-30 g/L in Prozesswasser ist.

6. Verfahren nach einem der vorhergehenden Ansprüche, wobei die Kontaktzeit von festem Persauerstoff oder einer nicht wässrigen Lösung von festem Persauerstoff mit Katalase enthaltendem Wasser wenigstens 2 Minuten, vorzugsweise 10 Minuten, stärker bevorzugt wenigstens 20 Minuten, stärker bevorzugt wenigstens 30 Minuten, stärker bevorzugt wenigstens 45 Minuten, beträgt.

7. Verfahren nach einem der vorhergehenden Ansprüche, wobei Natriumpercarbonat-Partikel eine Beschichtung besitzen.

8. Verfahren nach einem der vorhergehenden Ansprüche, wobei die beschichteten Natriumpercarbonat-Partikel eine Beschichtung mit verzögerter Auflösung haben.

9. Verfahren nach einem der vorhergehenden Ansprüche, wobei die Beschichtung mit verzögerter Auflösung ein anorganisches Material enthält.

10. Verfahren nach einem der vorhergehenden Ansprüche, wobei das anorganische Material ein Alkalimetall-Silikat enthält.

11. Verfahren nach einem der vorhergehenden Ansprüche, wobei die Natriumpercarbonat-Partikel eine Natriumsulfat-Beschichtung enthalten.

12. Verfahren nach einem der vorhergehenden Ansprüche, das das Hinzufügen wenigstens eines Biozids zu dem Prozess umfasst.

13. Verwendung von festem Persauerstoff oder einer nicht wässrigen Lösung von festem Persauerstoff für die Deaktivierung von Enzymen, die Wasserstoffperoxid zerlegen, in einem wässrigen Prozess für die Herstellung von wiedergewonnenem Faserbrei und/oder Holzschliff.

14. Verwendung nach Anspruch 13, wobei der feste Persauerstoff oder die nicht wässrige Lösung von festem Persauerstoff beschichtete Natriumpercarbonat-Partikel, optional mit einer Beschichtung mit verzögerter Auflösung, umfasst.

## Revendications

1. Procédé d'inactivation d'enzymes de décomposition du peroxyde d'hydrogène dans la production de pâte fibreuse et/ou de pâte mécanique recyclée, **caractérisé par le fait que** le procédé comprend la fourniture de peroxygène solide ou d'une solution non aqueuse de peroxygène solide à un procédé aqueux pour la production de fibres.

2. Procédé selon la revendication 1, dans lequel le peroxygène solide ou la solution non aqueuse de peroxygène solide comprend du percarbonate de sodium et/ou du perborate de sodium.

3. Procédé selon l'une des revendications 1 ou 2, dans lequel la pâte comprend du papier récupéré.

4. Procédé selon l'une quelconque des revendications précédentes, dans lequel les enzymes de décomposition du peroxyde d'hydrogène comprennent des catalases.

5. Procédé selon l'une quelconque des revendications précédentes, dans lequel la quantité de peroxygène solide ou de solution non aqueuse de peroxygène solide est de 0,1-10 kg/t de papier o.d. ou 0,001-100 g/L dans l'eau de traitement, de préférence 1-6 kg/t de papier o.d. ou 0,01-30 g/L dans l'eau de traitement.

6. Procédé selon l'une quelconque des revendications précédentes, dans lequel le temps de contact du peroxygène solide ou de la solution non aqueuse de peroxygène solide avec de l'eau à teneur en catalase est d'au moins 2 minutes, de préférence 10 minutes, plus préférentiellement d'au moins 20 minutes, plus préférentiellement d'au moins 30 minutes, plus préférentiellement d'au moins 45 minutes.

7. Procédé selon l'une quelconque des revendications précédentes, dans lequel des particules de percarbonate de sodium présentent un enrobage.

8. Procédé selon l'une quelconque des revendications précédentes, dans lequel les particules de percarbonate de sodium enrobées présentent un enrobage à libération retardée.

9. Procédé selon l'une quelconque des revendications précédentes, dans lequel l'enrobage à libération retardée comprend une matière inorganique.

10. Procédé selon l'une quelconque des revendications précédentes, dans lequel la matière inorganique comprend un silicate de métal alcalin.

11. Procédé selon l'une quelconque des revendications précédentes, dans lequel les particules de percarbonate de sodium comprennent un enrobage de sulfate de sodium.

12. Procédé selon l'une quelconque des revendications précédentes, comprenant l'addition d'au moins un biocide au procédé.

13. Utilisation de peroxygène solide ou de solution non aqueuse de peroxygène solide pour l'inactivation d'enzymes de décomposition du peroxyde d'hydrogène dans un procédé aqueux pour la production de pâte fibreuse et/ou de pâte mécanique recyclée.

14. Utilisation selon la revendication 13, dans laquelle le peroxygène solide ou la solution non aqueuse de peroxyde solide comprend des particules de percarbonate de sodium enrobées, facultativement avec un enrobage à libération retardée.
